# EUROPÄISCHE PATENTANMELDUNG

(11) **EP 2 712 142 A1**
(43) Veröffentlichungstag der Anmeldung: **26.03.2014**
(21) Anmeldenummer: 13185933.2
(22) Anmeldetag: 25.09.2013
(51) Int. Cl.: H04L 29/06, H04W 12/02

(54) **Verfahren zum Austauschen einer vertraulichen Information zwischen einem Server und einem mobilen Endgerät**

(30) Priorität: 25.09.2012 DE 102012109051
(71) Anmelder: MindMatics Secure Messaging GmbH, 80807 München (DE)
(72) Erfinder: Barbalata, Armin, 85774 Unterföhring (DE)
(74) Vertreter: Molnia, David

(57) **Zusammenfassung**

Die Erfindung bezieht sich auf ein Verfahren zum Austauschen einer vertraulichen Information zwischen einem Server (4) und einem mobilen Endgerät (2), die folgenden Schritte umfassend: Versenden (41) einer Nachricht zur Benachrichtigung über das Vorliegen einer vertraulichen Information von dem Server (4) an das mobile Endgerät (2),
Einleiten der Messung einer Zeitspanne mittels eines Timers im Server (4),
Übertragen der vertraulichen Daten von dem Server (4) an das mobile Endgerät (2) über eine verschlüsselte Datenverbindung (VD) in Antwort auf eine Anforderung des mobilen Endgeräts (2) innerhalb der Zeitspanne,
Übertragen der vertraulichen Daten über einen Nachrichtendienst eines Netzbetreibers nach Ablauf der Zeitspanne, wenn keine Anforderung innerhalb der Zeitspanne empfangen wird.

## Beschreibung

### Technisches Gebiet

Die Erfindung bezieht sich auf ein Verfahren zum Austauschen einer vertraulichen Information zwischen einem Server und einem mobilen Endgerät.

### Stand der Technik

Aus dem Bereich des Online-Banking ist die Verwendung von Transaktionsnummern (TAN) bekannt. Für einen Online-Zugriff auf Konten oder Depots, wie zum Beispiel das Ausführen einer Transaktion, wird der Kunde aufgefordert, in eine entsprechende Eingabemaske eines Online-Bankingportals eine TAN einzugeben. Eine TAN kann dabei nur einmal verwendet werden und übernimmt die Funktion einer virtuellen Unterschrift.

In den vergangenen Jahren war die Verwendung von TAN-Listen weit verbreitet. Diese wurden dem Kunden zunächst per Post zugeschickt. Bei der Ausführung von beispielsweise einer Transaktion wurde der Kunde dann aufgefordert eine beliebige TAN der Liste anzugeben.

Dieses Verfahren wurde durch die indizierte TAN-Liste (iTan) abgelöst. Das iTAN-Verfahren kennzeichnet sich dadurch, dass der Kunde aufgefordert wird eine ganz bestimmte TAN der TAN-Liste anzugeben.

Beide Verfahren gelten heute weitestgehend als unsicher und überholt, da in den vergangenen Jahren insbesondere erfolgreiche Phishing-Angriffe (Password harvesting fishing-Angriffe) und andere Virusattacken auf diese Verfahren zugenommen haben.

Gegenwärtig erfahren die auf TAN-Listen basierenden Verfahren eine Ablösung durch die sogenannten Mobile TAN- (mTAN) oder SMS-TAN-Verfahren. Dabei erhält der Kunde nachdem er die für die gewünschte Transaktion benötigten Daten vollständig in eine entsprechende Eingabemaske des Online-Bankingportals eingegeben hat, von dem Kreditinstitut eine TAN per SMS auf sein Mobiltelefon zugesendet. Die TAN ist dabei in der Regel nur für die Transaktion gültig, für welche sie vom Kunden angefordert worden ist. Darüber hinaus kann die Gültigkeit der TAN auch zusätzlich einer zeitlichen Begrenzung unterliegen.

Um die Sicherheit weiter zu erhöhen, kann überdies vorgesehen sein, die Details, insbesondere das Zielkonto der Transaktion, in der durch das Kreditinstitut versandten SMS neben der TAN mit anzugeben. Dadurch kann verhindert werden, dass Hacker in Echtzeit das Zielkonto unter Vortäuschung einer offiziellen Eingabemaske des jeweiligen Kreditinstituts im Hintergrund für den Kunden nicht sichtbar ändern.

Ein weiterer Vorteil gegenüber den TAN-Listen Verfahren besteht darin, dass der Kunde die gültigen TAN nicht mit sich herumführen beziehungsweise an einem sicheren Ort aufbewahren muss.

Zur Übertragung der TAN per SMS bedient sich das Kreditinstitut eines Netzbetreibers und/oder eines Serviceproviders, welche den Versand der SMS und die Zustellung an ein mobiles Endgerät ermöglichen. Durch diesen Service fallen zusätzliche Kosten an, welche je nach Kreditinstitut von diesem selber getragen oder teilweise beziehungsweise vollständig auf den Kunden abgewälzt werden.

Des Weiteren zeigt die jüngste Entwicklung die ersten Angriffe auf SMS-TAN Verfahren. Darunter fallen beispielsweise Angriffe wie SMiShing, Exploit, Brechen der GSM-Verschlüsselung oder auch die Anforderung einer neuen SIM-Karte durch einen Dritten, wodurch ein Angreifer an die Informationen einer SMS-TAN gelangen kann.

### Darstellung der Erfindung

Ausgehend von dem beschriebenen Stand der Technik ist es Aufgabe der vorliegenden Erfindung, ein Verfahren anzugeben, welches den Defiziten des Standes der Technik beikommt.

Diese Aufgabe wird durch ein Verfahren mit den Merkmalen des Anspruchs 1 gelöst. Vorteilhafte Ausgestaltungen des Verfahrens ergeben sich aus den Unteransprüchen.

Entsprechend umfasst ein Verfahren zum Austauschen einer vertraulichen Information zwischen einem Server und einem mobilen Endgerät die folgenden Schritte: In einem ersten Schritt wird eine Nachricht zur Benachrichtigung über das Vorliegen einer vertraulichen Information von einem Server an das mobile Endgerät versendet.

Dadurch, dass die Nachricht lediglich eine Benachrichtigung darstellt, kommen unbefugte Dritte für den Fall, dass sie an die Information der Nachricht gelangen, nicht an die vertrauliche Information, welche weiterhin auf dem Server liegt. Entsprechend genügt für das Versenden der Nachricht eine unverschlüsselte Datenverbindung. Darüber hinaus erspart das Versenden der Nachricht zur Benachrichtigung über das Vorliegen einer vertraulichen Information dem Benutzer den Schritt eines Anfragens, ob die vertrauliche Information bereits erhältlich ist.

In einem nächsten Schritt wird die Messung einer Zeitspanne mittels eines Timers im Server eingeleitet.

Durch das Messen der Zeitspanne besteht die Möglichkeit, Aktionen des Servers von der Zeitspanne abhängig zu machen.

In einem weiteren Schritt werden vertrauliche Daten von dem Server an das mobile Endgerät über eine verschlüsselte Datenverbindung übertragen. Dabei wird dieser Schritt in Antwort auf eine Anforderung des mobilen Endgerätes, welche innerhalb der Zeitspanne liegt, ausgeführt.

Die Verwendung einer verschlüsselten Datenverbindung zur Übertragung der vertraulichen Information umfasst den Vorteil, dass wenn unbefugte Dritte die übertragenen Daten abfangen oder sonst wie in der Lage sind, die Daten zu empfangen, diese verschlüsselt und somit in der Regel unbrauchbar sind. Ein weiterer Vorteil besteht darin, dass die Übertragung der vertraulichen Information lediglich auf Anforderung des mobilen Endgerätes innerhalb der Zeitspanne erfolgt. Die vertrauliche Information wird nicht einfach darauf losgeschickt.

Die verschlüsselte Datenverbindung wird über ein Internet Protokoll (IP) basiertes Netz erzeugt. Dabei wird neben der Verschlüsselung auf einer Transportschicht auch die eigentliche

Kommunikation signiert. Die Verschlüsselung der Transportschicht verhindert die Möglichkeit des Abhörens der Nachricht. Darüber hinaus stellt die Signatur sicher, ob das anfordernde mobile Endgerät für den Erhalt der vertraulichen Information bestimmt ist.

In einem nächsten Schritt wird die vertrauliche Information über einen Nachrichtendienst eines Netzbetreibers übertragen, für den Fall, dass die Zeitspanne abgelaufen ist, ohne dass eine Anforderung des mobilen Endgerätes innerhalb der Zeitspanne empfangen worden ist.

Dadurch kann sichergestellt werden, dass eine Zustellung der vertraulichen Information an das mobile Endgerät in jedem Fall erfolgt.

In einer weiter bevorzugten Ausführungsform weist das Verfahren vor dem Versenden der Nachricht zur Benachrichtigung über das Vorliegen einer vertraulichen Information für ein mobiles Endgerät den Schritt auf, wonach die vertrauliche Information über eine verschlüsselte Datenverbindung am Server, bevorzugt von einem Kreditinstitut, empfangen wird.

Dadurch ist die vertrauliche Information bereits auf ihrer ersten Übertragung von dem Ersteller der vertraulichen Information zu dem Server gegen Angriffe von Dritten geschützt.

In einer weiter bevorzugten Ausführungsform weist das Verfahren einen Push-Provider zur Übertragung der Benachrichtigung von dem Server an das mobile Endgerät auf. Dabei wird zur Übertragung der Benachrichtigung eine unverschlüsselte Benachrichtigung verwendet.

Ein Push-Provider ist ein Anbieter, der es ermöglicht über ein System, bevorzugt einen Server, Pushnachrichten an Endgeräte, bevorzugt mobile Endgeräte, zu senden. Ein Push-Provider basiert auf dem Prinzip, dass ein Informationsfluss von einem Sender gesteuert wird und der Kommunikationsfluss primär in eine Richtung, vom Sender zum Empfänger verläuft.

Durch die Miteinbeziehung eines Push-Providers kann die Benachrichtigung ohne Initiative des Benutzers seitens des mobilen Endgeräts von dem Server auf das mobile Endgerät übertragen werden.

In einer weiter bevorzugten Ausführungsform beschreibt der Timer eine Zeitspanne, welche serverseitig einstellbar ist und vorgibt, wie viel Zeit für den Eingang der Anforderung des mobilen Endgerätes bereitgestellt ist.

Der Timer stellt einen Zeitmesser dar, welcher als Steuerbaustein auf dem Server dazu dient, eine Zeitspanne zu messen. Der Server kann dann Ereignisse in Abhängigkeit von der Zeitspanne steuern.

Durch die Möglichkeit, die Zeitspanne einzustellen, kann diese an durchschnittlich zu erwartende Reaktionszeiten des mobilen Endgerätes zum Senden einer Anforderung angepasst werden. Entsprechend kann davon ausgegangen werden, dass ein Benutzer in der Regel am Rechner sitzt und bereit ist die vertrauliche Information unmittelbar anzufordern. Eine unnatürlich langes Ausbleiben einer Anforderung, welches als Hinweis auf Komplikationen bezüglich der Datenverbindung zwischen Server und mobilem Endgerät aufgefasst werden kann, kann mit Hilfe des Timers erkannt werden und diesem somit die Möglichkeit geben entsprechend zu reagieren.

In einer weiter bevorzugten Ausführungsform weist das mobile Endgerät eine Applikation auf. Durch Ausführen der Applikation kann eine verschlüsselte Datenverbindung zwischen Server und mobilem Endgerät aufgebaut werden.

Dadurch muss eine verschlüsselte Datenverbindung zwischen dem mobilen Endgerät und dem Server nicht kontinuierlich aufrechterhalten werden. Diese wird vielmehr lediglich bei Bedarf, nämlich bei einer Anforderung durch einen Benutzer, indem dieser die Applikation ausführt, aufgebaut.

Unter einer Applikation ist hier ein Anwendungsprogramm für ein mobiles Endgerät zu verstehen. Die Applikation kann in der Regel über einen entsprechenden Onlineshop erworben und auf dem mobilen Endgerät installiert werden.

In einer bevorzugten Ausführungsform wird für den Aufbau einer Datenverbindung zwischen dem mobilen Endgerät und dem Server eine Internetverbindung verwendet.

In der Regel besteht für mobile Endgeräte eine hohe Verfügbarkeit für Internetverbindungen. Zusätzlich bietet eine Internetverbindung eine Vielzahl an Möglichkeiten, zu übertragende Daten zu verschlüsseln.

In einer weiter bevorzugten Ausführungsform umfasst die am Server innerhalb der Zeitspanne eingehende Anforderung des mobilen Endgeräts zusätzlich Authentifizierungsinformationen, bevorzugt eine Telefonnummer des mobilen Endgeräts, eine alphanumerische Identifizierung einer Applikation, welche der Datenverbindung zugrunde liegt, eine Anzeigesprache des mobilen Endgeräts und/oder eine Signatur.

Dadurch stehen dem Server Daten zur Verfügung, mittels welcher er prüfen kann, ob das mobile Endgerät zur Anforderung der zum Versenden bereiten vertraulichen Information berechtigt ist.

Die Signatur kann zum Beispiel ein sicherer Hash-Algorithmus (SHA) Code sein, welcher eine Gruppe standardisierter kryptologischer Hashfunktionen bezeichnet und zur Berechnung eines eindeutigen Prüfwerts dient. Alternativ kann die Signatur mit Hilfe eines privaten Schlüssels gemäß eines asymmetrischen Verschlüsselungsverfahren erzeugt werden.

In einer weiter bevorzugten Ausführungsform weist das Verfahren den Schritt auf, wonach der Server anhand einer Auswertung der Anforderung überprüft, ob das mobile Endgerät für den Erhalt der vertraulichen Information bestimmt ist.

Dadurch kann sichergestellt werden, dass der Server die vertrauliche Information nur an das richtige mobile Endgerät sendet.

In einer bevorzugten Ausführungsform weist die Übertragung der vertraulichen Information bevorzugt die Übertragung eines Anzeigetextes, eines Absenders und/oder eines Status die Gültigkeit der vertraulichen Information betreffend, auf.

Der Anzeigetext, welcher die vertrauliche Information darstellt, kann unmittelbar nach Erhalt auf dem mobilen Endgerät angezeigt werden. Durch das zusätzliche Übertragen des Absenders der vertraulichen Information, ist der Benutzer bzw. der Empfänger der vertraulichen Information in der Lage, diese zuzuordnen.

In einer bevorzugten Ausführungsform ist das mobile Endgerät bevorzugt ein Mobiltelefon, Smartphone oder Tablet-Computer.

In einer weiter bevorzugten Ausführungsform ist der Nachrichtendienst bevorzugt eine Kurznachrichtendienst (SMS) oder dergleichen.

Diese Nachrichtendienste sind weit verbreitet und mit gängigen mobilen Endgeräten kompatibel. Dadurch kann die Wahrscheinlichkeit einer erfolgreichen Zustellung der vertraulichen Information an ein mobiles Endgerät erhöht werden.

In einer weiter bevorzugten Ausführungsform ist die vertrauliche Information eine Transaktionsnummer.

Eine Transaktionsnummer ist ein Einmalpasswort, das in der Regel aus sechs Dezimalziffern besteht und überwiegend im Bereich des Online-Bankings Anwendung findet. Es ist eine weitere Aufgabe der Erfindung einen Server anzugeben, welcher den Defiziten des Standes der Technik zumindest teilweise beikommt.

Diese Aufgabe wird durch einen Server mit den Merkmalen des Anspruchs 12 gelöst. Vorteilhafte Ausgestaltungen dieses Servers ergeben sich aus den Unteransprüchen.

Mit Hilfe des Servers werden die oben dargestellten Vorteile erreicht.

Bevorzugte weitere Ausführungsformen und Aspekte der vorliegenden Erfindung werden durch die nachfolgende Beschreibung der Figuren näher erläutert. Dabei zeigt:

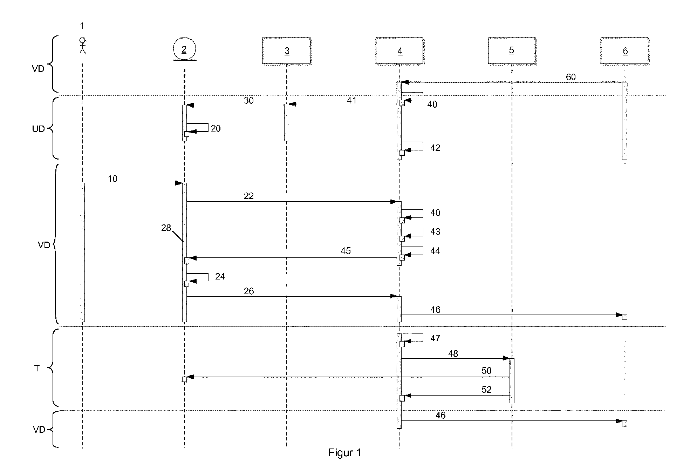

- Figur 1: schematisch ein Sequenzdiagramm eines Verfahrens zum Austauschen von vertraulichen Informationen.

### Detaillierte Beschreibung bevorzugter Ausführungsbeispiele

Im Folgenden werden bevorzugte Ausführungsbeispiele anhand der Figuren beschrieben. Dabei werden gleiche ähnliche oder gleich wirkende Elemente mit identischen Bezugszeichen bezeichnet und auf diese Weise und auf eine wiederholte Beschreibung dieser Elemente wird in der nachfolgenden Beschreibung teilweise verzichtet, um Redundanzen zu vermeiden.

Figur 1 zeigt schematisch ein Verfahren zum Austauschen einer vertraulichen Information zwischen einem Server 4 und einem mobilen Endgerät 2. Dabei wird eine vertrauliche Information, bevorzugt Transaktionsnummern (TAN), beispielsweise von einem Kreditinstitut 6 an den Server 4 geleitet, welcher eine Pushnachricht an ein mobiles Endgerät 2 überträgt bei Schritt 41, um dieses über das Vorliegen der vertraulichen Information zu informieren.

Anschließend startet der Server 4 bei Schritt 42 einen Timer. Baut das mobile Endgerät 2 eine Datenverbindung, bevorzugt eine Internetverbindung, zu dem Server 4 auf, indem es die vertrauliche Information bei Schritt 22 anfordert, bevor der Timer bei Schritt 47 abgelaufen ist, so wird die vertrauliche Information von dem Server 4 über eine verschlüsselte Datenverbindung an das mobile Endgerät 2 bei Schritt 45 übertragen.

Wenn hingegen der Timer bei Schritt 47 abläuft, ohne dass die vertrauliche Information zuvor bei Schritt 22 durch das mobile Endgerät 2 angefordert worden ist, sendet, der Server 4 bei Schritt 48 die vertrauliche Information über einen Netzbetreiber 5 per Kurznachricht (SMS) oder dergleichen, an das mobile Endgerät.

In einer bevorzugten Ausführungsform sendet ein Kreditinstitut 6 bei Schritt 60 eine Nachricht an einen Server 4. Das Senden der Nachricht bei Schritt 60 erfolgt dabei über eine verschlüsselte Datenverbindung VD. Die versendete Nachricht enthält eine Telefonnummer im nationalen oder internationalen Format eines mobilen Endgerätes 2 eines Benutzers 1, den Absender, einen Text, bevorzugt die vertrauliche Information, und/oder Informationen über die Gültigkeit der vertraulichen Information. Die Gültigkeit der vertraulichen Information besitzt dabei die Funktion eines Verfallsdatums.

Nachdem die Nachricht mit der vertraulichen Information bei Schritt 60 von dem Kreditinstitut 6 an den Server 4 gesendet worden ist, überprüft der Server 4 bei Schritt 40 anhand der übermittelten Telefonnummer, ob das mobile Endgerät 2 einen Push-Nachrichtendienst für eine Applikation 28 von einem Push-Provider 3 abonniert hat. Ist das der Fall, sendet der Server 4 bei Schritt 41 eine Push-Nachricht über eine unverschlüsselte Datenverbindung an den Push-Provider 3. Daraufhin wird die Push-Nachricht bei Schritt 30 von dem Push-Provider 3 an das entsprechende mobile Endgerät 2 ebenfalls über eine unverschlüsselte Datenverbindung UD gesendet. Dabei enthält die ursprünglich vom Server 4 bei Schritt 41 gesendete Push-Nachricht die Information über das Vorliegen einer neuen vertraulichen Information.

Nachdem das mobile Endgerät 2 die Push-Nachricht erhalten hat, wird auf dem mobilen Endgerät 2 eine Nachricht über das Vorliegen von neuen vertraulichen Informationen auf dem Server 4 angezeigt.

Nachdem der Server 4 bei Schritt 41 die Push-Nachricht über das Vorliegen einer neuen vertraulichen Information abgesendet hat, startet er bei Schritt 42 einen Timer. Die Zeitspanne des Timers ist dabei so gewählt, dass der Benutzer 1 des mobilen Endgerätes 2 ausreichend Zeit hat, auf die Push-Nachricht über das Vorliegen einer neuen vertraulichen Information auf dem Server 4 zu reagieren.

Bis zum Ablauf des Timers bei Schritt 47 hat der Benutzer 1 die Möglichkeit, auf dem mobilen Endgerät 2 die Applikation 28 zu starten, welche eine verschlüsselte Datenverbindung, bevorzugt eine Internet-Verbindung zu dem Server 4 aufbaut. Unmittelbar nach dem Starten der Applikation 28 auf dem mobilen Endgerät 2 bei Schritt 10, sendet das mobile Endgerät 2 bei Schritt 22 eine Nachricht über die verschlüsselte Datenverbindung an den Server 4. Bei der Nachricht handelt es sich um eine Anforderung der vertraulichen Information auf dem Server 4, wobei die Nachricht die Telefonnummer des mobilen Endgerätes, eine alphanumerische Identifizierung der Applikation 28 von maximal 20 Zeichen, die Anzeigesprache des mobilen Endgerätes in Form eines Iso-Codes und eine Signatur umfasst. Dabei kann die Signatur ein SHA-Code über Parameter sein oder eine Signatur, welche von der Applikation 28 mittels eines privaten Schlüssels erzeugt worden ist.

Nachdem die Anforderung der vertraulichen Information bei Schritt 22 von dem mobilen Endgerät 2 an den Server 4 erfolgt ist, sucht und überprüft der Server 4 bei den Schritten 40 beziehungsweise 43 das Abonnement der Applikation 28 auf dem mobilen Endgerät 2 mittels der von dem mobilen Endgerät 2 übertragenen Telefonnummer. Bevorzugt können auch die alphanumerische Identifizierung der Applikation 28 sowie die Signatur herangezogen werden, um zu überprüfen, ob das mobile Endgerät 2 zur Anfrage der vorliegenden vertraulichen Information bei Schritt 22 berechtigt ist.

In einem nächsten Schritt 44 überprüft der Servers 4 die Verfügbarkeit der vertraulichen Information. Ist diese verfügbar, so sendet der Server bei Schritt 45 eine Antwortnachricht über die verschlüsselte Datenverbindung VD an das mobile Endgerät 2. Die Antwortnachricht enthält dabei die vertrauliche Information in Form eines Textes, Benutzerinformationen, den Absender, die Zustellzeit sowie die Dauer der Gültigkeit der vertraulichen Information in Sekunden.

Nach dem Erhalt der Antwortnachricht auf dem mobilen Endgerät 2, wird diese, bevorzugt die vertrauliche Information, der Absender und ein Zeitstempel, bei Schritt 24 auf dem mobilen Endgerät 2 angezeigt.

Im Anschluss daran wird bei Schritt 26 von dem mobilen Endgerät 2 eine Bestätigung über den Erhalt der vertraulichen Information beziehungsweise der Antwortnachricht über die verschlüsselte Datenverbindung VD an den Server gesendet. Die Bestätigung enthält dabei die Telefonnummer des mobilen Endgerätes, die alphanumerische Identifizierung der Applikation 28 auf dem mobilen Endgerät, die Anzeigesprache des mobilen Endgerätes in Form eines ISO-Codes, eine Benutzeridentifizierung sowie eine Signatur.

Nachdem die Bestätigung über den Erhalt der vertraulichen Information auf dem Server 4 eingegangen ist, sendet der Server 4 bei Schritt 46 eine Übertragungsbenachrichtigung über eine verschlüsselte Datenverbindung VD an das Kreditinstitut 6.

Für den Fall, dass auf dem Server 4 vor Ablauf des Timers bei Schritt 47 keine Anforderung der vertraulichen Information durch das mobile Endgerät 2 eingegangen ist, sendet der Server 4 bei Schritt 48 eine Kurznachricht über ein Telekommunikationsnetzwerk T an einen Netzbetreiber 5. Dabei beinhaltet die Kurznachricht die Telefonnummer des mobilen Endgerätes 2, den Absender, die vertrauliche Information sowie die Gültigkeit der vertraulichen Information.

Bei Schritt 50 wird die Kurznachricht von dem Netzbetreiber 5 über ein Telekommunikationsnetzwerk T an das mobile Endgerät 2 gesendet. Dabei umfasst die Kurznachricht die Telefonnummer des mobilen Endgerätes, den Absender, bevorzugt das Kreditinstitut 6, sowie die vertrauliche Information. In einem nächsten Schritt 52 sendet der Netzbetreiber 5 eine Übertragungsbenachrichtigung über das Telekommunikationsnetzwerk T an den Server 4, um diesem die Zustellung der Kurznachricht an das mobile Endgerät 2 zu bestätigen. Schließlich sendet der Server 4 bei Schritt 46 eine Übertragungsbenachrichtigung über eine verschlüsselte Datenverbindung VD an das Kreditinstitut 6, um diesem die Zustellung der vertraulichen Information an das mobile Endgerät 2 und somit an den Benutzer 1 anzuzeigen.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Benutzer
- 10: Starten einer Applikation

- 2: Mobiles Endgerät
- 20: Anzeigen einer Nachricht
- 22: Anfordern der vertraulichen Information
- 24: Anzeigen der vertraulichen Information
- 26: Senden einer Bestätigung
- 28: Applikation

- 3: Push Provider
- 30: Versenden einer Pushnachricht

- 4: Server
- 40: Nachschlagen eines Abonnements
- 41: Übertragung einer Pushnachricht
- 42: Starten eines Timers
- 43: Überprüfung
- 44: Überprüfung der Verfügbarkeit einer Nachricht
- 45: Antwort
- 46: Senden eines Übertragungsbenachrichtigung
- 47: Ablauf eines Timers
- 48: Senden einer Kurznachricht

- 5: Netzbetreiber
- 50: Übertragung einer Nachricht
- 52: Senden einer Übertragungsbenachrichtigung

- 6: Kreditinstitut
- 60: Senden einer Nachricht

- UD: Unverschlüsselte Datenverbindung
- VD: Verschlüsselte Datenverbindung

- T: Telekommunikationsnetzwerk

## Patentansprüche

1. Verfahren zum Austauschen einer vertraulichen Information zwischen einem Server (4) und einem mobilen Endgerät (2), die folgenden Schritte umfassend:
Versenden (41) einer Nachricht zur Benachrichtigung über das Vorliegen einer vertraulichen Information von dem Server (4) an das mobile Endgerät (2),
Einleiten der Messung einer Zeitspanne mittels eines Timers im Server (4),
Übertragen der vertraulichen Daten von dem Server (4) an das mobile Endgerät (2) über eine verschlüsselte Datenverbindung (VD) in Antwort auf eine Anforderung des mobilen Endgeräts (2) innerhalb der Zeitspanne,
Übertragen der vertraulichen Daten über einen Nachrichtendienst eines Netzbetreibers nach Ablauf der Zeitspanne, wenn keine Anforderung innerhalb der Zeitspanne empfangen wird.

2. Verfahren gemäß Anspruch 1, wobei das Versenden einer Nachricht zur Benachrichtigung über das Vorliegen einer vertraulichen Information an ein mobiles Endgerät (2) unmittelbar nach dem Empfang einer vertraulichen Information über eine verschlüsselte Datenverbindung (VD) bevorzugt von einem Kreditinstitut (6) erfolgt.

3. Verfahren gemäß Anspruch 1 oder 2, wobei die Übertragung der Nachricht von dem Server (4) an ein mobiles Endgerät (2) über einen Push Provider (3) erfolgt.

4. Verfahren gemäß einem der vorstehenden Ansprüche, wobei der Timer eine Zeitspanne beschreibt, welche serverseitig einstellbar ist und vorgibt, wie viel Zeit für den Eingang der Anforderung des mobilen Endgeräts (2) bereitgestellt ist.

5. Verfahren gemäß einem der vorstehenden Ansprüche, wobei auf das mobile Endgerät (2) eine Applikation (28) geladen ist, wobei durch Ausführen der Applikation (28) die verschlüsselte Datenverbindung (VD) zwischen Server (4) und mobilem Endgerät (2) aufgebaut werden kann.

6. Verfahren gemäß einem der vorstehenden Ansprüche, wobei zum Aufbau einer Datenverbindung zwischen dem mobilen Endgerät (2) und dem Server (4) eine Internetverbindung verwendet wird.

7. Verfahren gemäß Anspruch 6, wobei die am Server (4) innerhalb der Zeitspanne eingehende Anforderung des mobilen Endgeräts (2) zusätzlich Authentifizierungsinformationen, bevorzugt eine Telefonnummer des mobilen Endgeräts (2), eine alphanumerische Identifizierung einer Applikation (28), welche der Datenverbindung zugrunde liegt, eine Anzeigesprache des mobilen Endgeräts (2) und/oder eine Signatur, umfasst.

8. Verfahren gemäß einem der vorstehenden Ansprüche, wobei der Server (4) anhand einer Auswertung der Anforderung überprüft, ob das mobile Endgerät (2) für den Erhalt der vertraulichen Information bestimmt ist.

9. Verfahren gemäß einem der vorstehenden Ansprüche, wobei die Übertragung der vertraulichen Information bevorzugt die Übertragung eines Anzeigetextes, eines Absenders und/oder eines Status die Gültigkeit der vertraulichen Information betreffend umfasst.

10. Verfahren gemäß einem der vorstehenden Ansprüche, wobei das mobile Endgerät (2) bevorzugt ein Mobiltelefon, Smartphone oder Tablet Computer ist.

11. Verfahren gemäß einem der vorstehenden Ansprüche, wobei der Nachrichtendienst bevorzugt ein Kurznachrichtendienst oder dergleichen ist.

12. Server zum Austauschen einer vertraulichen Information mit einem mobilen Endgerät (2), umfassend:
Mittel zum Versenden einer Nachricht zur Benachrichtigung über das Vorliegen einer vertraulichen Information von dem Server (4) an das mobile Endgerät (2),
Mittel zum Einleiten der Messung einer Zeitspanne mittels eines Timers im Server (4),
Mittel zum Übertragen der vertraulichen Daten von dem Server (4) an das mobile Endgerät (2) über eine verschlüsselte Datenverbindung (VD) in Antwort auf eine Anforderung eines mobilen Endgeräts (2) innerhalb der Zeitspanne,
Mittel zum Empfangen der Anforderung eines mobilen Endgeräts (2) innerhalb der Zeitspanne,
Mittel zum Übertragen der vertraulichen Daten über einen Nachrichtendienst eines Netzbetreibers nach Ablauf der Zeitspanne, wenn keine Anforderung innerhalb der Zeitspanne empfangen wird.

13. Server gemäß Anspruch 12, wobei der Server Mittel zum Empfangen einer vertraulichen Information über eine verschlüsselte Datenverbindung (VD) bevorzugt von einem Kreditinstitut (6) umfasst.

14. Server gemäß Anspruch 12 oder 13, wobei der Server einen Timer umfasst, welcher eine Zeitspanne beschreibt, welche serverseitig einstellbar ist und vorgibt, wie viel Zeit für den Eingang der Anforderung des mobilen Endgeräts (2) bereitgestellt ist.

15. Server gemäß einem der Ansprüche 12 bis 14, wobei der Server (4) Mittel zur Auswertung der Anforderung umfasst, mittels welcher überprüfbar ist, ob das mobile Endgerät (2) für den Erhalt der vertraulichen Information bestimmt ist.
